# EUROPEAN PATENT SPECIFICATION

(11) **EP 2 182 695 B1**
(45) Date of publication and mention of the grant of the patent: **20.06.2012**
(21) Application number: 08872738.3
(22) Date of filing: 21.11.2008
(51) Int. Cl.: G06F 17/30, H04L 29/06

(54) **METHOD, SYSTEM AND DEVICE OF DATA SYNCHRONIZATION**
VERFAHREN, SYSTEM UND VORRICHTUNG ZUM DATENABGLEICH
PROCÉDÉ, SYSTÈME ET DISPOSITIF DE SYNCHRONISATION DE DONNÉES

(30) Priority: 18.02.2008 CN 200810008281
(43) Date of publication of application: 05.05.2010
(60) Divisional application: 12160667.7
(73) Proprietor: Huawei Technologies Co., Ltd., Longgang District, Shenzhen Guangdong 518129 (CN)
(72) Inventor: LI, Kepeng c/o Huawei Technologies Co.Ltd., Longgang District 518129, Shenzhen (CN); WANG, Rui c/o Huawei Technologies Co.Ltd., Longgang District 518129, Shenzhen (CN); LIU, Haitao c/o Huawei Technologies Co.Ltd., Longgang District 518129, Shenzhen (CN); CHAI, Xiaoqian c/o Huawei Technologies Co.Ltd., Longgang District 518129, Shenzhen (CN)
(74) Representative: Kreuz, Georg Maria
(86) International application number: PCT/CN2008/073157
(87) International publication number: WO 2009/103212

(56) References cited:
- EP-A1- 1 626 591
- CN-A- 1 956 452
- CN-A- 1 985 474
- CN-A- 101 105 793
- US-A- 5 884 323
- US-A1- 2006 106 887
- "SYNCML SYNC PROTOCOL, VERSION 1.1" SYNCML SYNC PROTOCOL, XX, XX, 15 February 2002 (2002-02-15), pages 1-62, XP003013007
- OPEN MOBILE ALLIANCE: "SyncML Device Management Protocol, Version 1.1.2" ANNOUNCEMENT OPEN MOBILE ALLIANCE, XX, XX, no. VERSION 1.1.2, 12 December 2003 (2003-12-12), pages 1-41, XP002406303
- ERICSSON ET AL: "SyncML REPRESENTATION PROTOCOL, VERSION 1.0.1" SYNCML REPRESENTATION PROTOCOL, XX, XX, 15 June 2001 (2001-06-15), pages 1-105, XP002977306

## Description

### FIELD OF THE INVENTION

The present invention relates to communication technologies, and in particular, to a method, a system, and an apparatus for Data Synchronization (DS).

### BACKGROUND

The Synchronization Markup Language (SyncML) protocol defines the message interaction process during synchronization between a SyncML client and a SyncML server, and defines data synchronization types, including: bidirectional synchronization, client-initiated directional synchronization, server-initiated directional synchronization, slow synchronization, and server announcement synchronization. A SyncML synchronization process is divided into three stages, and is generally performed through six data packages. The quantity of data packages involved varies with the synchronization type. After a synchronization session is completed successfully, both parties need to update the anchor value to indicate success of the session. At the beginning of the next session, the sender sends the anchor value to the recipient. The recipient compares the received anchor value with the stored anchor value. If the received anchor value is same as the stored anchor value, it is deemed that the previous session succeeds; otherwise, the previous session fails, and a special synchronization mode is started.

In the synchronization process stipulated in the SyncML synchronization protocol, once the device needs to synchronize, the device initiates a synchronization session, and the process of the synchronization session is fixed. Message package 1 and message package 2 send initialization information, message package 3 and message package 4 exchange data, and the synchronization session ends after message package 5 and message package 6 are sent.

In special scenarios such as Converged IP Messaging (CPM), the presence information of the terminal needs to be updated onto the server in real time, and data is updated frequently. Therefore, the session connection needs to be held in real time for exchanging update data between both parties anytime. In some scenarios, the transmission resources are not limited. For example, it is easy to keep the session connection between a mobile station and a smart card for a long period. Therefore, in such scenarios, both parties need to hold continuous synchronization sessions.

In the process of developing the present disclosure, the inventor finds at least the following defects in the prior art: The synchronization process in the prior art is fixed and inflexible. When multiple synchronization processes cannot start or end simultaneously, the synchronization does not continue unless the session is recreated.

"SYNCML SYNC PROTOCOL, VERSION1.1" dated 15.02.2002 describes a synchronization protocol between a SyncML client and server in form of message sequence charts. It specifies how to use the SyncML Representation protocol so that interoperating SyncML client and server solutions are accomplished.

EP 1626591 A 1 describes a method of synchronizing a terminal and a server in a shadow area of service in a push-to-talk service system. The method comprises: "establishing a session with the server; transmitting to and receiving from the server a real time transport control protocol (RTCP) packet and a real time transport protocol (RTP) packet; and ending the session established with the server if the RTP packet or the RTCP packet is not received by the mobile terminal for a certain time."

US 5 884 323 A describes a method for synchronization between a computer system and a handheld device, which can synchronize data for several different applications using multiple synchronisation processes within one synchronization session.

### SUMMARY

The embodiments of the present disclosure provide a method, a system, and an apparatus for synchronizing data according to the independent claims to overcome inflexibility of the data synchronization mode in the prior art. The dependent claims relate to preferred aspects and embodiments.

A first aspect of the disclosure relates to a method for synchronizing data which includes:
sending a synchronization session request to a synchronization recipient to create a synchronization session connection between a synchronization initiator and the synchronization recipient; wherein the synchronization session comprises one or more synchronization processes; and
starting, in the synchronization session connection, the one or more synchronization processes through which the synchronization initiator synchronizes data with the synchronization recipient;
the method comprising:
   maintaining the synchronization session connection in an Alert Poll mode or a Alert Idle mode;
   wherein in the Alert Poll mode, the synchronization initiator sends a first Alert command to the synchronization recipient, and the synchronization recipient returns a Status command which carries a waiting time, wherein the synchronization initiator sends a session maintenance command after expiry of the waiting time, if the synchronization initiator sends no new command and receives no new command from the synchronization recipient within the waiting time;
   in the Alert Idle mode, the synchronization initiator sends a second Alert command to a synchronization recipient which carries a waiting time, and wherein the synchronization recipient sends back a Status command after expiry of the waiting time, if the synchronization initiator sends no new command and receives no new command from the synchronization recipient within the waiting time; and after receiving the Status command, the synchronization initiator sends a session maintenance command;
   and sending, by either the synchronization initiator or the synchronization recipient a session end command to the other of the synchronization initiator and the synchronization recipient to request to end the synchronization session; wherein the other of the synchronization initiator or synchronization recipient needs to accept the request and to end the session ; when the synchronization recipient wants to continue the synchronization, the synchronization recipient initiates a new synchronization session .

A second aspect of the disclosure relates to a system for synchronizing data
which includes:
a synchronization initiator, adapted to synchronize data with a synchronization recipient; and
a synchronization recipient, adapted to receive a synchronization session request. Specifically, the synchronization initiator is adapted to:
send a synchronization session request to the synchronization recipient to create a synchronization session connection with the synchronization recipient; wherein the synchronization session comprises one or more synchronization processes; and
start a synchronization process in the synchronization session, and synchronize data with the synchronization recipient through the one or more synchronization processes.

A synchronization initiator is provided in an embodiment according to the third aspect of the present disclosure. The synchronization initiator includes:
a creating module (821), adapted to send a synchronization session request to the synchronization recipient to create a synchronization session connection with the synchronization recipient; wherein the synchronization session comprises multiple synchronization processes;
a starting module (822), adapted to start the synchronization processes in the synchronization session created by the creating module; and a synchronizing module (823), adapted to synchronize data with the synchronization recipient through the synchronization process started by the starting module; wherein the synchronization processes are executed concurrently or sequentially;
the synchronizing module (823) further comprises: a command sending submodule (8233), adapted to send a session maintenance command to the synchronization recipient when waiting for new synchronization data after one of the synchronization processes ends in the synchronization session; wherein the synchronization session connection is maintained in an Alert Poll mode or a Alert Idle mode; wherein in the Alert Poll mode, the synchronization initiator sends a first Alert command to the synchronization recipient, and the synchronization recipient returns a Status command which carries a waiting time, wherein the synchronization initiator sends a session maintenance command after expiry of the waiting time, if the synchronization initiator sends no new command and receives no new command from the synchronization recipient within the waiting time;
in the Alert Idle mode, a synchronization initiator sends a second Alert command which carries a waiting time to a synchronization recipient, and wherein the synchronization recipient sends back a Status command after expiry of the waiting time, if the second synchronization sends no new command and receives no new command from the synchronization initiator within the waiting time; and after receiving the Status command, the synchronization initiator sends a session maintenance command;
an acknowledgement receiving submodule (8234), adapted to receive an acknowledgement returned by the synchronization recipient and hold the synchronization session;
a module adapted to send a session end command to the synchronization recipient to request to end the synchronization session; wherein the synchronization recipient needs to agree to end the session; when the synchronization recipient wants to continue the synchronization, the synchronization recipient initiates a new synchronization session.

Compared with the prior art, the embodiments of the present disclosure bring the following benefits: A synchronization process is started in the synchronization session, and the synchronization initiator synchronizes data with the synchronization recipient through the synchronization process, thus synchronizing the data between both parties flexibly.

### BRIEF DESCRIPTION OF THE DRAWINGS

FIG. 1 is a flowchart of a method for synchronizing data according to an embodiment of the present disclosure;
FIG. 2 shows the relation between a synchronization session and a synchronization process according to an embodiment of the present disclosure;
FIG. 3 is a flowchart of terminating a synchronization session and a synchronization process according to an embodiment of the present disclosure;
FIG. 4 is a flowchart of maintaining a session through a session maintenance command according to an embodiment of the present disclosure;
FIG. 5 is a flowchart of updating a synchronization anchor value according to a synchronization process according to an embodiment of the present disclosure;
FIG. 6 shows negotiation of a new synchronization process between both parties in the case of mismatch of the anchor value between both parties according to an embodiment of the present disclosure;
FIG. 7 is a flowchart of a method for synchronizing data according to an embodiment of the present disclosure;
FIG. 8 shows a structure of a system for synchronizing data according to an embodiment of the present disclosure; and
FIG. 9 shows a structure of a system for executing a synchronization command according to an embodiment of the present disclosure.

### DETAILED DESCRIPTION

A method for synchronizing data is provided in an embodiment of the present invention. A synchronization process is started in the synchronization session, and the synchronization initiator synchronizes data with the synchronization recipient through the synchronization process, thus synchronizing the data between both parties flexibly.

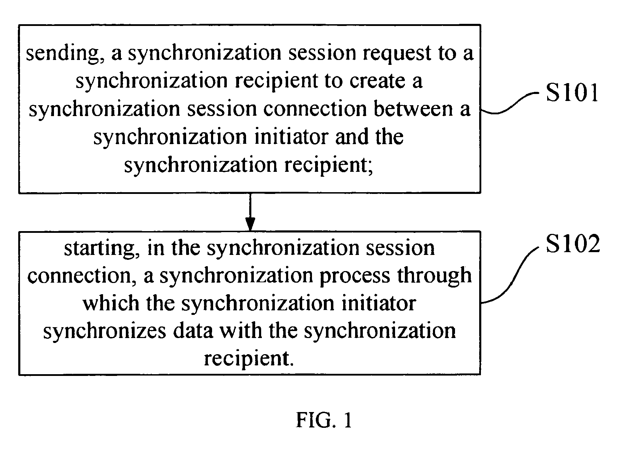

FIG. 1 is a flowchart of a method for synchronizing data according to an embodiment of the present invention. The method includes the following steps:
Step S101: A synchronization initiator sends a synchronization session request to a synchronization recipient to create a synchronization session connection with the synchronization recipient. The synchronization session includes one or more synchronization processes. Multiple synchronization processes include different process identifiers or different database identifiers.
Step S102: A synchronization process is started in the synchronization session, and the synchronization initiator synchronizes data with the synchronization recipient through the synchronization process.

In this embodiment, a synchronization process end identifier is affixed to the synchronization process. According to the synchronization message package that carries this synchronization process end identifier, both parties of the synchronization determine termination of the synchronization process.

In this embodiment, a synchronization session end identifier is affixed to the synchronization session. According to the synchronization message package that carries this synchronization session end identifier, both parties of the synchronization determine termination of the synchronization session.

If the synchronization process includes a first synchronization process and a second synchronization process, in order to let both parties know which specific synchronization process ends in this embodiment, the process identifier of the first synchronization process is correlated with the synchronization process end identifier of the first synchronization process, and the process identifier of the second synchronization process is correlated with the synchronization process end identifier of the second synchronization process. Alternatively, the synchronization process is correlated with the database identifier. The synchronization of different databases corresponds to different synchronization processes. The end of the synchronization process may also be determined according to the default sequence of executing the message packages. For example, after the mapping command and the acknowledgement to the mapping command are executed, it is deemed that the synchronization process ends.

In a synchronization session, when waiting for new data to be synchronized after completion of a synchronization process, the synchronization initiator sends a session maintenance command or an idle message package to the synchronization recipient, receives an acknowledgement returned by the synchronization recipient, and holds the synchronization session. Preferably, the session maintenance command carries the authentication information of both parties. Through the authentication information, the synchronization initiator and the synchronization recipient are authenticated to enhance security. Optionally, the session maintenance command or the idle message may be not answered.

In this embodiment, the session maintenance command or the idle message package is sent by the synchronization initiator to the synchronization recipient at preset intervals. For example, the synchronization initiator sends a session maintenance command or an idle message package to the synchronization recipient at 15-minute intervals. Alternatively, the waiting time is specified in the session message.

Before the synchronization process is started, the synchronization initiator and the synchronization recipient maintain their respective first anchor value. The synchronization process request sent by the synchronization initiator to the synchronization recipient carries the first anchor value stored by the synchronization initiator after the first synchronization process ends, and carries the second anchor value newly generated by the synchronization initiator. Afterward, the synchronization recipient judges whether the received first anchor value is the same as the first anchor value stored by the synchronization recipient. If the received first anchor value is the same as the first anchor value stored, the synchronization recipient sends a second anchor value to the synchronization initiator, and the second anchor value is the same as the second anchor value sent by the synchronization initiator, and the synchronization process goes on. If the received first anchor value is not the same as the first anchor value stored, the synchronization recipient believes that the previous synchronization process is not ended normally.

When a synchronization process ends or when a message package of the synchronization process is sent, both parties of the synchronization update the anchor value. The anchor value indicates whether the synchronization process ends successfully or whether the message package of the synchronization process is sent successfully. Specifically, the synchronization recipient updates the first anchor value stored by the synchronization recipient to the second anchor value sent by the synchronization initiator, and sends an acknowledgement command to the synchronization initiator to confirm termination of the synchronization process. The synchronization initiator also updates the first anchor value of the synchronization initiator to the second anchor value. If errors occur in the synchronization process, neither party updates the anchor value.

A method for executing a synchronization command is provided in an embodiment of the present invention. The method is: The synchronization recipient receives a synchronization command from the synchronization initiator, where the synchronization command carries an instruction of executing a synchronization command item; and executes the synchronization command item in the mode indicated by the instruction.

If the instruction of executing the synchronization command item is a sequential execution instruction, the synchronization recipient executes the synchronization command item sequentially.

If the instruction of executing the synchronization command item is an atomic execution instruction, the synchronization recipient executes the synchronization command item atomically. For example, in adding a folder, if all subfolders and files in the folder are added successfully, it indicates that the Add operation is executed successfully; if any subfolder or file in the folder is added unsuccessfully, the whole Add operation fails.

In this embodiment, a synchronization process is added in the synchronization session. A synchronization session may include multiple synchronization processes. Such synchronization processes may be started in any message package only if the synchronization session is not ended. The synchronization session may not be ended only if one synchronization process is not ended. In this embodiment, the commands related to a synchronization process needs to have a unified identifier. Each synchronization process uses a "SyncAlert" to negotiate the synchronization type and the object that needs to be synchronized, and uses a "Sync" command to execute the specific synchronization operation.

The identifier of the synchronization process may be either of the following:
(1) A process ID, whose schema is stipulated below:
   <xs:attribute name="ProcessID" type="xs:int"/>
   Both parties of the synchronization need to use the process ID to identify the synchronization process during the synchronization process. This process ID needs to be used in the synchronization request command (SyncAlert), synchronization command (Sync), and synchronization process end command (End_of_Process).
(2) A correlator, for example, a correlator carried in a synchronization request:

   ```
<SyncAlert CmdID= '12345'>
           <Correlator>jalkjkl134</Correlator>
          ...
</SyncAlert>
```

At the time of ending the synchronization process, this correlator is used to indicate which synchronization process is to be ended.

The function of the process ID is similar to the function of the correlator, and differs only in the schema design. In practice, either the process ID or the correlator may be applied. In this embodiment, the process ID is taken as an example.

Optionally, the synchronization process identifier is omissible. Different synchronization processes may be indicated by different database identifiers. For example:

```
          <SyncAlert CmdID= '12345'>
 
     <TargetURI>http://Syncserver.com/sync/contacts</TargetURI>
                <SourceURI> IME1:493005100592800/contacts</SourceURI>
                ... ...
          </SyncAlert>
```

where "contacts" is the database identifier. For different synchronization processes, the corresponding database identifier is different. If the same database is synchronized continuously after execution of a session maintenance command, the two processes are easily distinguishable because a time difference exists between them. The distinguishing is to distinguish between the synchronization processes which concur.

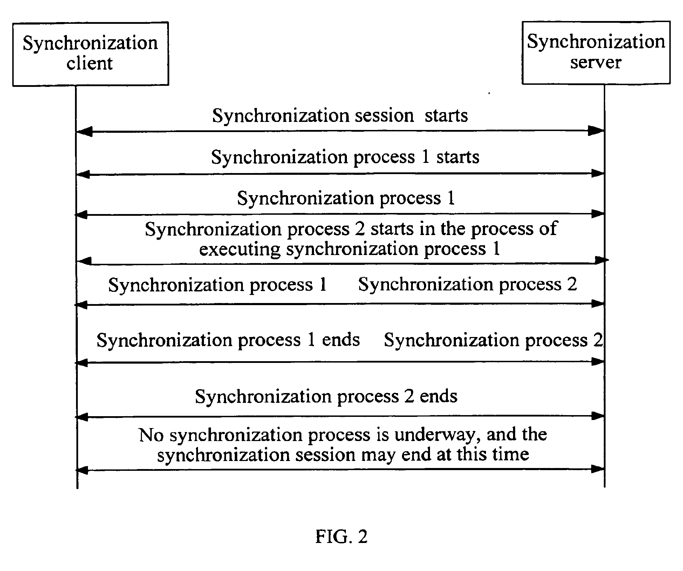

FIG. 2 shows an exemplary relation between a synchronization session and a synchronization process in an embodiment of the present invention. The embodiments of the present invention are not limited to such a relation, and a synchronization session may have multiple synchronization processes. The synchronization processes may be executed concurrently rather than sequentially.

When the synchronization processes are executed sequentially, a process ID needs to be carried in every synchronization request command (SyncAlert), synchronization command (for example, Sync, Alert, Get, Put, Sequence, Atomic), and synchronization process end command. In this way, both parties of the synchronization may identify the synchronization process to which the command in the message package belongs.

In this embodiment, an end identifier is affixed to the synchronization command and the synchronization process in the following way:
(1) For a synchronization session, an End_of_Session identifier is affixed, and its schema is stipulated below:
   <xs:element name="End_of_Session" type="EmptyType"/>

When this element appears in the message package, it indicates that the session ends. If further synchronization is required, a new session process needs to be initiated.

The session end command may be placed into a message package separately and sent to the synchronization recipient, or added into another synchronization command and sent to the synchronization recipient. If the command is placed into a message package separately and sent to the synchronization recipient, the synchronization recipient terminates the session normally after receiving the command. If the command is added into another synchronization command and sent to the synchronization recipient, the synchronization recipient executes the other synchronization command in the message package first, and terminates the session directly upon completion of the execution, without returning any result of executing the relevant synchronization command to the synchronization initiator. Alternatively, the synchronization recipient may buffer the synchronization command execution result in the last message package so that the other side may obtain the result when necessary. Alternatively, the synchronization recipient may send a message of ending the session to the synchronization initiator, indicating end of the session.

The session end command may be an Alert command. In this case, a specific code (such as 1220) needs to be designed for the Alert command to indicate normal termination of the session.

| | | |
|---|---|---|
| 1220 | Session End | Indicating end of the session to the other side |

Given below is a message instance:
<Alert CmdID="3" Code="1220"/> <!- indicating end of session>
(2) For synchronization processes, an <End_Of_Process> may be used to identify the end of the process. The schema of the <End_Of_Process> is like this:
   <xs:element name="End_Of_Process">
   <xs:complexType>
   <xs:attribute ref="CmdID" use="required"/>
   <xs:attribute ref="ProcessID" use="required"/>
   <xs:complexType>
   </xs:element>

Alternatively, an Alert command is executed to end the process, but an extended Alert code is required. For example:

| | | |
|---|---|---|
| 1224 | Process End | Indicating end of the synchronization process to the other side |

The functions of the two commands are similar except for the schema. In this embodiment, the End_of_Process command is taken as an example.

A session may include multiple processes. Therefore, the end identifier needs to be correlated with the synchronization process. Otherwise, if multiple synchronization processes occur simultaneously in a message, both parties of the synchronization do not know which synchronization process needs to be ended. The <SyncAlert> may be correlated with the <End_Of_Process> through a process identifier. For example, for the process ID, the synchronization request is:

```
     <SyncAlert CmdID="12345" ProcessID="1">
        ...
     </SyncAlert>
     The synchronization process end request is:
     <End_Of_Process CmdID="23456" ProcessID="1" />
```

The synchronization recipient knows which synchronization process is requested to terminate according to the process ID.

Another mode of ending a synchronization process is to determine whether the synchronization process ends according to the logical sequence of the message packages. For example, after both parties send the data for synchronization, the client sends the Map command, and the server returns an acknowledgement in response to the Map command successfully, it proves that the synchronization process between both parties is completed and needs to be ended.

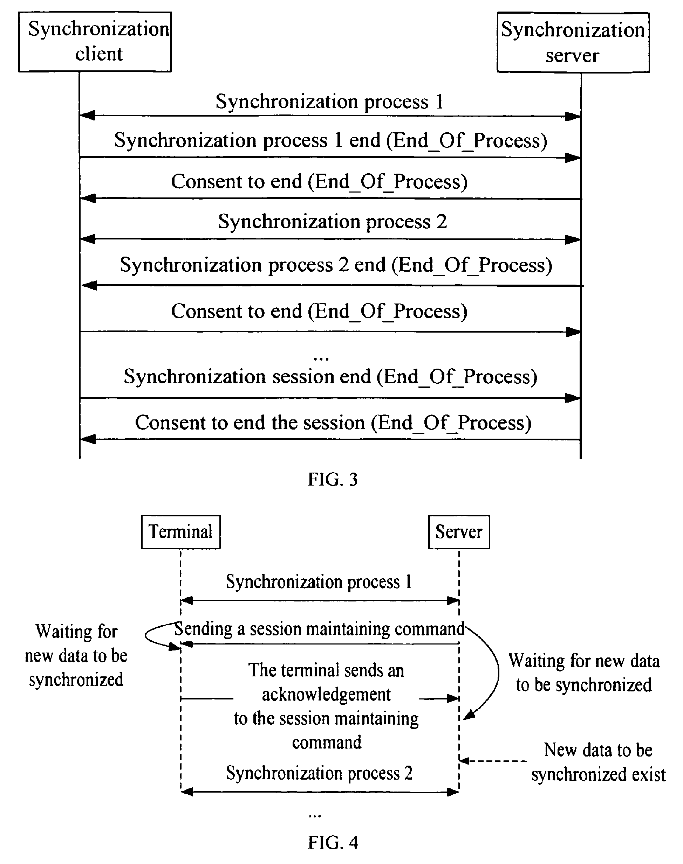

FIG. 3 is an exemplary flowchart of ending a synchronization process and a synchronization session.

In this embodiment, an "idle" indication is added for the synchronization session process in the following mode:

The format of the message package for adding the idle indication is shown below. The header (SyncHdr) is the same as that in the old message package, and the body (SyncBody) includes only an <Idle/> element and a <Final/> element. For the "idle" command, its schema is defined below:

```
     <xs:element name="Idle" type="EmptyType"/>
     <xs:complexType name="EmptyType"/>
     Given below is a message instance:
     <SyncML>
     <SyncHdr VerSchema="2.0" VerProto="SyncML/2.0"
      SessionID="1234" MsgID="5" >
     <Target> <LocURI>......</LocURI> </Target>
         <Source><LocURI>......</LocURI> </Source>
      </SyncHdr>
      <SyncBody>
      <Idle/> <!-idle identifier -->
         <Final/>
      </SyncBody>
      </SyncML>
```

After receiving the command, the synchronization recipient holds the session connection, and returns an acknowledgement. If this command does not exist in the message, the message is a normal session message.

This type of package is applicable to real-time synchronization. When no data needs to be synchronized between both parties and no session end identifier is sent by either party, both parties may send an idle package to hold the session connection. When any data needs to be synchronized, a message package is sent.
Before start of the synchronization session, both parties may send a command to indicate start of continuous synchronization to the other side. If no such command exists, it indicates that the session is not a continuous session, and includes only one synchronization process.

The continuous session start command may be an Alert command or a separate command such as Continuous_Sync. If the continuous session start command is an Alert command, a specific code (such as 1213) needs to be designed for the Alert command to indicate normal termination of the session.

| | | |
|---|---|---|
| 1213 | Continuous Session Start | Indicating start of continuous session to the other side |

Given below is a message instance:
<Alert CmdID="3" Code="1213"/> <!- indicating start of continuous session>

If the continuous session start command is a Continuous_Syncn command, the command may be included in a SyncAlert command. Given below is a message instance:

```
     <SyncAlert>
           <SyncType .../>
           <Continous_Sync/>
     </SyncAlert>
```

In this embodiment, the session is held through a session maintenance command. When the server or the terminal determines it necessary to hold the session synchronization (for example, a synchronization process is completed and the data needs to be updated), the synchronization initiator sends a SyncML message to the synchronization recipient, where the SyncML message carries a session maintenance command. The synchronization recipient returns an acknowledgement. When necessary, this process may be repeated until a party sends a substantial synchronization command to the other side. Both parties may send a session maintenance command at intervals, for example, at 1-minute intervals. If the SyncML message that carries the session maintenance command includes other synchronization commands, the other side may ignore the session maintenance command.

FIG. 4 is a flowchart. This embodiment supposes that the server sends a session maintenance command. The process of the terminal sending a session maintenance command to the server is similar to the process shown in FIG. 4, and is not repeated here any further.

The session maintenance command may be an Alert command. In this case, a new Alert Code needs to be designed for the command, as shown below:

| | | |
|---|---|---|
| 1221 | Session Waiting | Telling the other side to delay the session |

The specific command is as follows:
<Alert CmdID="2" Code="1221" /> <!-- indicating session maintenance -->

After receiving the session maintenance command from the server, the terminal holds the current session without performing any other substantial operation, and returns an acknowledgement to the command, as shown below:
<Status CmdID="2" MsgRef="1" CmdRef="2" Cmd="Alert" Code="200" />

Optionally, authentication information of both parties is carried in the session maintenance command for the purpose of authenticating both parties of the synchronization. Authentication messages enhance security without occupying many transmission resources.

In the foregoing solution, both parties may agree on time for sending the foregoing idle message intermittently. For example, if the client does not want to interrupt the session after completing the synchronization process, but wants to hold the real-time synchronization, the client may send idle messages at 15-minute intervals. The server may respond to the idle message. If the client receives a response, it indicates that both parties are maintaining the connection and may continue with the session.

The time may be agreed on through an Alert command or a Status command. Specifically, two implementation modes are available:

The first mode is Alert Poll. The session end requester (synchronization initiator) sends an Alert command, and the recipient returns a Status command which carries a waiting time. The requester holds the session according to the waiting time. If the requester sends no new command and receives no new command from the recipient within the waiting time, the requester needs to further send the session maintenance command after expiry of the waiting time.

```
 Alert Poll command:
     <Alert CmdID="2" Code="1221" />
     The returned Status command carries a waiting time:
     <Status CmdID="2" MsgRef="1" CmdRef="2" Cmd="Alert"
     Code="200">
      <Item>
           <Meta Format="int"/>
           <Data> 120</Data> <!-wait for 120s>
      <Item>
      </Status>
```

The other mode is Alert Idle. The session end requester sends an Alert command, which carries a waiting time. The recipient holds the session according to the waiting time. If the requester sends no new command and receives no new command from the recipient within the waiting time, the recipient needs to send back a Status command after expiry of the waiting time. After receiving the Status command, the requester goes on to send a session maintenance command.

```
 Alert Idle command:
      <Alert CmdID="2" Code="1221" >
      <Item>
             <Meta Format="int"/>
             <Data>120</Data> <!-wait for 120s>
      <Item>
      </Alert>
```

The returned Status command carries a waiting time:
<Status CmdID="2" MsgRef="1" CmdRef="2" " Cmd="Alert" Codc="200" />

When either party to a session sends a session end request, the other party needs to accept the request and end the session. If the recipient wants to continue with the session, the recipient may initiate a new session.

When the session requester requests to hold a session, the recipient ought to accept the request and hold the session. In some circumstance, however, the recipient may choose to end the session.

The basic process may be as follows:

In package 6 (the last message package in the synchronization process) returned by the server, if the server wants to end the session, the server sends a session end command; if expecting to continue the session, the server sends a session maintenance command; if the server has no intention, the server keeps the session and waits for response from the client.

After the client receives package 6 from the server, if the received message is a session end command, the client returns an acknowledgement and ends the session; if the received message is a session maintenance command, the client returns an acknowledgement and holds the session; if the received message carries no indication from the server, the client may choose to hold or end the session.

Optionally, after the session is held, both parties renegotiate the synchronization type, and send the data to be synchronized. The negotiation of the synchronization type may be simultaneous with the sending of the data to be synchronized.

After the session maintenance feature is added, when either party to synchronization changes data, the party sends the changed data to the other party directly without creating any new session connection. Such a feature is powerful in the scenarios with reliable transmission resources or the scenarios which require real-time synchronization strictly. For example, the synchronization between a smart card and a mobile station does not consume transmission resources. With the session maintenance solution, the server does not need to send a notification to the terminal to request session connection. In the CPM, the data is changed frequently on the client and the server, and both parties need to update the data in time. With the session maintenance solution, the updated data may be synchronized to the other side properly, thus fulfilling the service requirements.

Moreover, the timing synchronization may be implemented through a session maintenance command. For example, if the data is synchronized at 15-minute intervals, a session maintenance command "Alert" may be sent, and the "Data" of the command carries the maintenance time (15 minutes). Within the 15 minutes, the session is held without sending of any data. Once the session maintenance time expires, either party needs to send a session maintenance command again or send a new synchronization command.

Alternatively, after completion of a synchronization process, if neither party has new data for transmitting within the interval (such as 15 minutes), the sleep mode is applied to save the context scenario. Once a party has new data for transmitting, the party sends a wakeup command to wake the session. The wakeup command may be obtained by extending the Alert code, for example, Alert 1228.

| | | |
|---|---|---|
| 1228 | Session Wakeup | Telling the other side to wake the session |

After the session is woken up, both parties go on to transmit new data to be synchronized.

In this embodiment, the synchronization anchor value is updated according to the synchronization process. The anchor is used in this way: Before start of the synchronization, the client and the server maintain their own first anchor value, for example, Last Anchor. In the synchronization, the synchronization initiator sends the stored Last Anchor and the newly generated second anchor value (such as Next Anchor) to the synchronization recipient. The synchronization recipient compares the received Last Anchor with the stored Last Anchor. If they are the same, the synchronization recipient sends the same Next Anchor to the synchronization initiator, and the synchronization process goes on; otherwise, it is deemed that the previous synchronization process is not ended normally. When either party receives an <End_Of_Process> identifier from the other party and the state information indicates success of the synchronization process, the synchronization recipient updates its Last Anchor value to Next Anchor.

If errors occur in the synchronization process, both parties neither send the <End_Of_Process> identifier nor update the anchor value.

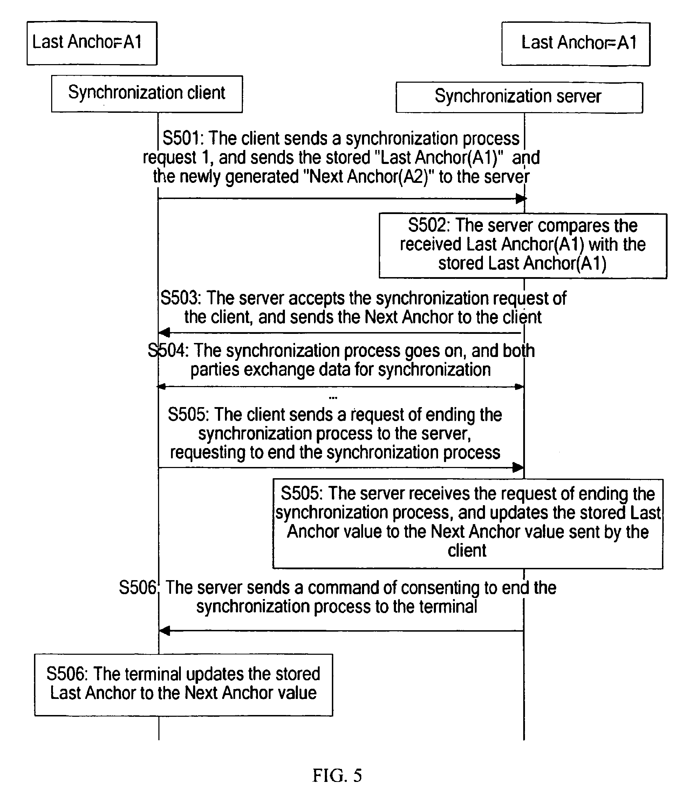

As shown in FIG. 5, the detailed steps may include:
Step S501: The client sends a synchronization process request 1, and sends the stored first anchor value "Last Anchor (A1)" and the newly generated second anchor value "Next Anchor(A2)" to the server.
Step S502: The server compares the received Last Anchor (A1) with the stored Last Anchor(A1). If the two values are the same, it indicates that the previous session succeeds, and the synchronization process goes on.
Step S503: The server accepts the synchronization request of the client, and sends the Next Anchor to the client.
Step S504: The synchronization process goes on, and both parties exchange data for synchronization.
Step S505: The client sends a request of ending the synchronization process to the server, requesting to end the synchronization process. The server receives the request of ending the synchronization process, and updates the stored Last Anchor value to the Next Anchor value sent by the client.
Step S506: The server sends a command of consenting to end the synchronization process to the terminal, and the terminal updates the stored Last Anchor to the Next Anchor value.

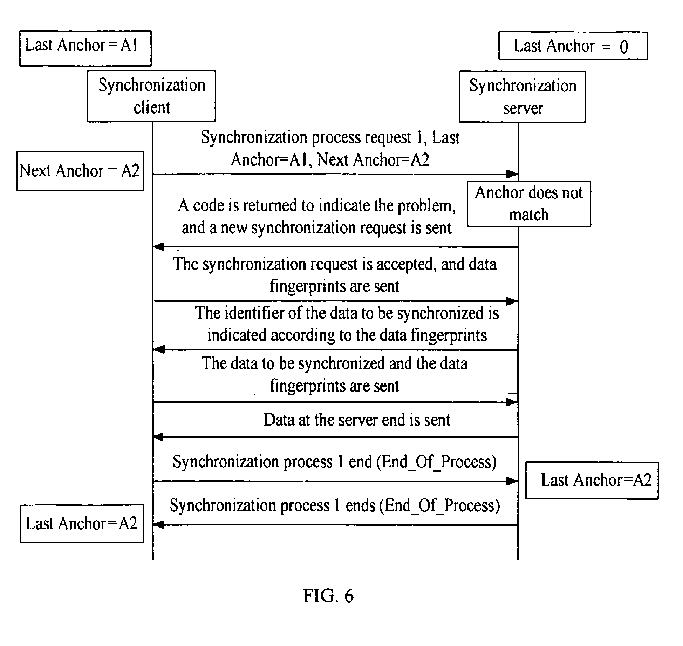

When exceptions occur, if the synchronization process is interrupted or either party resets the Anchor value in the synchronization process and leads to mismatch of the Anchor value, both parties negotiate a new synchronization process, as shown in FIG. 6.

In FIG. 6, the Anchor on the server is reset to 0, thus leading to mismatch of the Anchor between both parties. In this case, the server sends a new synchronization request, requesting the client to send data fingerprints for judging the data to be synchronized. The client accepts the synchronization request, and sends data fingerprints to the server. The server judges the data to be synchronized according to the data fingerprints, and sends a data identifier to the client. The client sends the data to be synchronized and the fingerprints, and the server sends the data to be synchronized on the server to the client. Subsequently, the session ends normally, and both parties update the Anchor. The step of updating the Anchor is similar to that described above.

The foregoing solution updates the Anchor for the synchronization process. Alternatively, the Anchor may be updated according to the message package (Package) or the synchronization command (Sync). That is, the synchronization initiator adds two Anchor values (Last Anchor and Next Anchor) into each synchronization package or synchronization command. The synchronization recipient updates the Next Anchor value if receiving the package or command successfully; the synchronization initiator updates its own Next Anchor value if receiving a response from the synchronization recipient successfully, and so on. In this way, the success or failure of each synchronization package or synchronization command may be identified. The conception is similar to that of the Anchor in the synchronization process, but the granularity is finer. Therefore, when exceptions occur, the mismatched anchors are traced, and the message package or synchronization command which fails may be resent rather than resending all packages or synchronization commands, thus saving the transmission traffic and improving the synchronization efficiency.

The sequential execution instruction and an atomic execution instruction between multiple items in a synchronization command are described above. In the synchronization process in this embodiment, the synchronization (for example, Add, Replace, Delete, Move, and Copy) sent by the server or client to the other side may carry multiple items. In this way, one synchronization command may be sent to operate multiple data of the other side. For example, the schema of the Replace command is:
<xs:element name="Replace" type="RepIaceType"/>
<xs:complexType name="ReplaceType">
<xs:sequence>
<xs:element ref="NoStatus" minOccurs="0"/>
<xs:element ref="Cred" minOccurs="0"/>
<xs:element ref="Meta" minOccurs="0"/>
<xs:element ref="Item" maxOccurs="unbounded"/>
</xs:sequence>
<xs:attribute ref="CmdID" use="required" />
<xs:attribute ref="FieldLevel" use="optional"/>
</xs:complexType>

That is, the Replace command may carry multiple items to indicate that the Replace operation is performed for multiple data elements. Multiple items sometimes need to be processed sequentially, and sometimes need to be processed non-sequentially, depending on the command sender. For example, in synchronizing a folder, the folder is synchronized first, and then the files in the folder are synchronized. In order to indicate a sequential execution instruction of multiple items in a synchronization command, the server or the client adds a sequential item execution indication into the synchronization command to be sent to the other side in the following way:
(1) The parent element of the item element carries a <Sequence> attribute which indicates a sequential execution instruction of the sub-elements. The schema of the <Sequence> attribute may be:
   <xs:attribute name="Sequence" type="xs:boolean" default="false"/>
   If this attribute exists in the synchronization command, it indicates that the item elements need to be executed sequentially; otherwise, the command recipient may decide whether to execute the item elements sequentially at its own discretion. If this attribute does not exist, the execution is non-sequential by default, and is performed by the client.
   Given below is a message instance:
   <Replace CmdID="2" Sequence="true">
   <Item> ... </Item>
   <Item> ... </Item>
   </Replace>
(2) An indicative subelement (which is a brother element of the Item element) is added into the Parent element that covers the Item element. The schema may be:
   <xs:element name="Sequence" type="EmptyType" />
(3) A shell element (namely, Parent element) is added for the Item to be executed sequentially. The shell element serves the only purpose of telling the terminal that the elements in this shell need to be executed sequentially.

After resolving the Replace command to obtain the sequential item execution indication, the synchronization recipient executes the Replace command sequentially for the data indicated by the Item.

The atomic operation means that multiple items are executed atomically, namely, either all successfully or all unsuccessfully. For example, in adding a folder, if all subfolders and files in the folder are added successfully, it indicates that the Add operation is executed successfully; if any subfolder or file in the folder is added unsuccessfully, the whole Add operation fails. In this way, the integrity of data operation is ensured.

Likewise, the indication of atomic operation is carried in a command in the following way:
(1) The parent element of the item element carries an <Atomic> attribute which indicates an atomic execution instruction of the sub-elements. The schema of the <Atomic> attribute may be:
   <xs:attribute name="Atomic" type="xs:boolean" default="false"/>

If this attribute exists in the synchronization command, it indicates that the item elements need to be executed atomically; otherwise, the command recipient may decide whether to execute the item elements atomically at its own discretion. If this attribute does not exist, the execution is non-atomic by default, and is performed by the terminal.

```
     Given below is a message instance:
     <Replace CmdID="2" Atomic="true">
     ...
     <Item> ... </Item>
     <Item> ... </Item>
     </Replace>
```

(2) An indicative subelement (which is a brother element of the Item element) is added into the Parent element that covers the Item element. The schema may be:
   <xs:clement name="Atomic" type="EmptyType" />
(3) A shell element is added for the Item to be executed atomically. The shell element serves the only purpose of telling the terminal that the elements in this shell need to be executed atomically.

After resolving the Replace command to obtain the Item Atomic execution instruction indication, the synchronization recipient executes the Replace command atomically for the data indicated by the Item.

Only one state code needs to be returned for multiple items executed atomically.

The data synchronization method under the present invention is elaborated below through an embodiment.

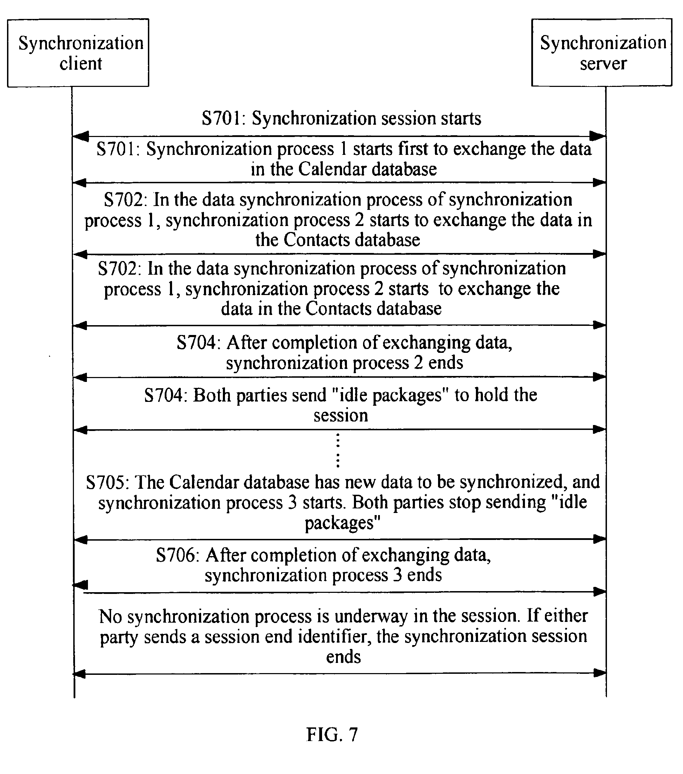

There is a terminal "IMEI=493005100592800", which includes two databases "./Contacts" and "./Calendar" and needs to synchronize data with the server "http://www.syncml.org/sync-server". The corresponding databases on the server are "./dev-contacts" and "./dev-Calendar". The terminal holder expects to keep the Calendar database synchronous with the server in real time within a time period, and expects to perform synchronization once any data changes unless a session end identifier is given. During the synchronization of the Calendar database, the Contacts database may be synchronized at the same time. FIG. 7 shows the entire synchronization process. Synchronization process 1 and synchronization process 3 show synchronization of the Calendar database, and synchronization process 2 shows synchronization of the Contacts database.

The synchronization process includes the following detailed steps:
Step S701: The synchronization session begins. Synchronization process 1 is started first to exchange the data in the Calendar database. The start of the synchronization session (including start of synchronization process 1) is exemplified below: 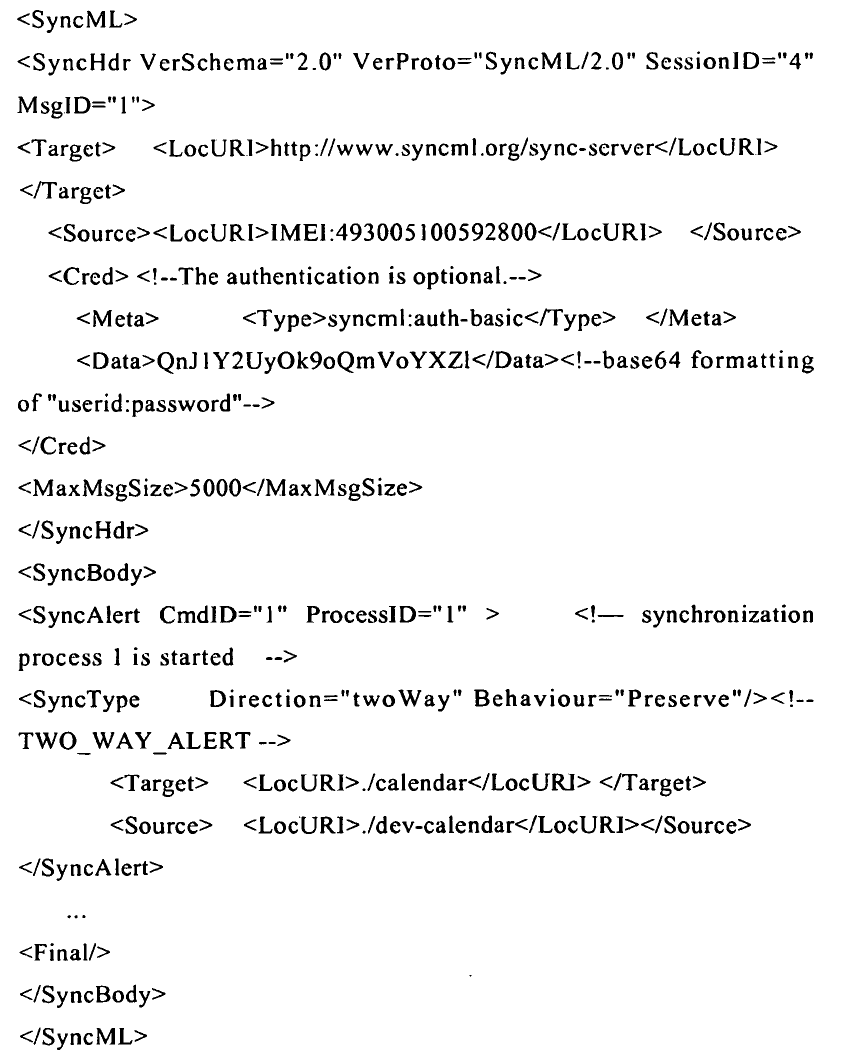
Step S702: In the data synchronization process of synchronization process 1, synchronization process 2 is started to exchange the data in the Contacts database. In the data synchronization process of synchronization process 1, the start of synchronization process 2 is exemplified below: 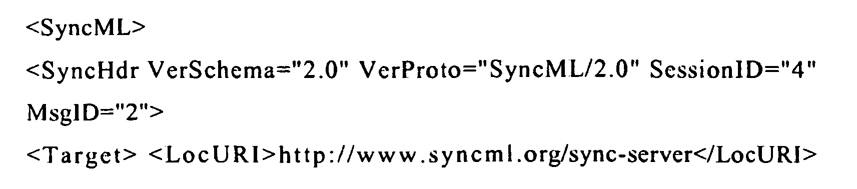 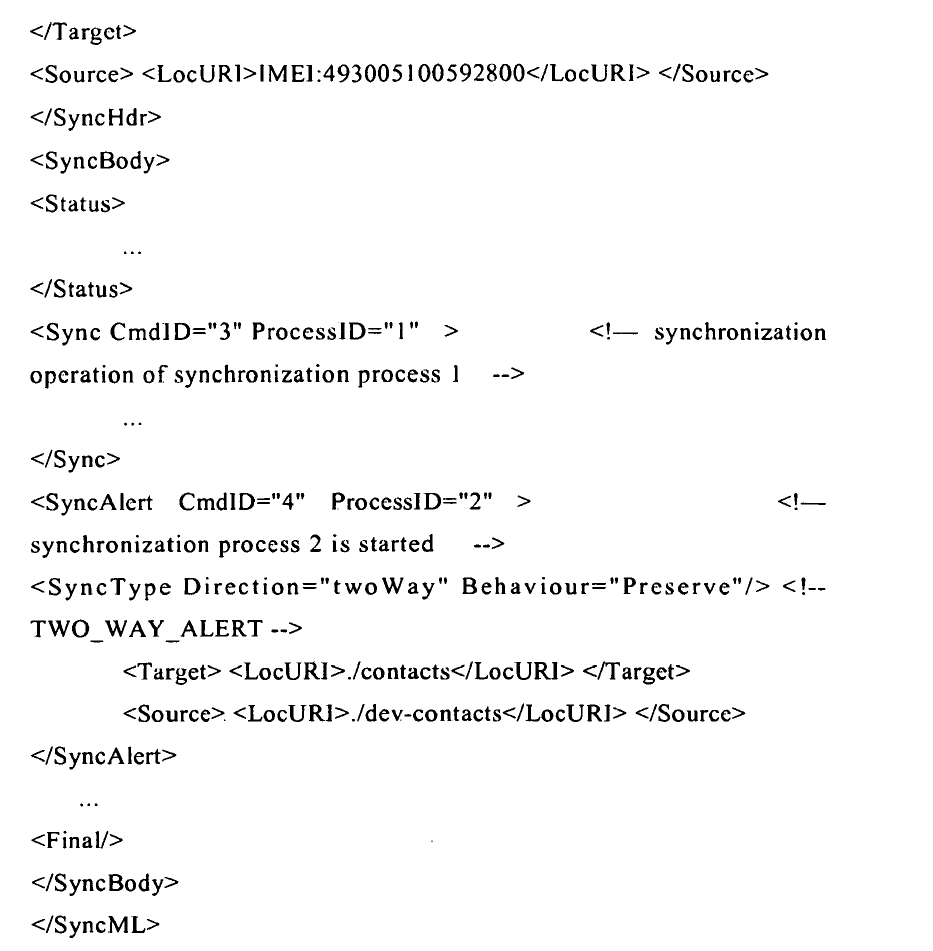
Step S703: Synchronization process I ends after completion of exchanging the data, and synchronization process 2 goes on. After termination of synchronization process 1, the sending of the end identifier is exemplified below:

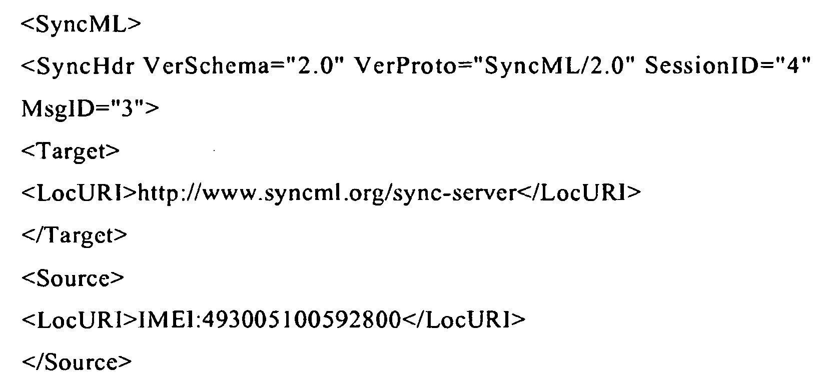

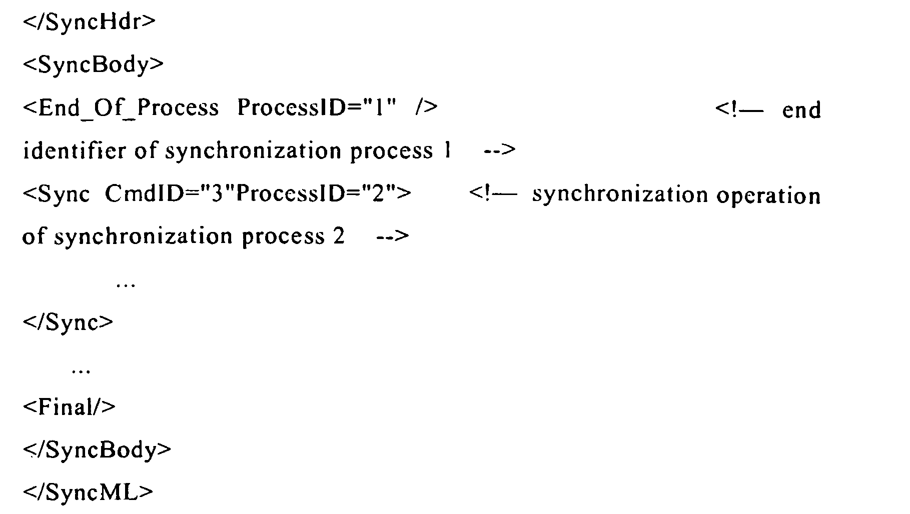

The end identifier of synchronization process 1 may be packaged into the synchronization command (Sync command) of synchronization process 1. The synchronization recipient executes other synchronization commands in the message package first, and ends the session after completion of the execution, without returning any result of executing the synchronization command to the synchronization initiator. The command recipient may buffer the synchronization command execution result in the last message package so that the other side may obtain the result when necessary. The message package is exemplified below:

```
     <SyncML>
     <SyncHdr VerSchema="2.0" VerProto="SyncML/2.0" SessionID="4"
     MsgID="3">
     <Target> <LocURt>http://www.syncml.org/sync-server</LocURI>
     </Target>
     <Source> <LocURI>IMEI:493005100592800</LocURI> </Source>
     </SyncHdr>
     <SyncBody>
     <Sync CmdID="2" ProcessID="1">
     ...
     </Sync>
     <End_Of_Process ProcessID="1" /> <!- end
     identifier of synchronization process 1 -->
     <Sync CmdID="3"ProcessID="2"> <!- synchronization operation
     of synchronization process 2 -->
     ...
     </Sync>
     ...
     <Final/>
     </SyncBody>
     </SyncML>
```

Step S704: Synchronization process 2 ends after completion of exchanging the data. At this time, no data synchronization operation is underway in the synchronization session, but the session is held because no session end identifier is received. Both parties send "idle packages". The idle package sent in the synchronization session is exemplified below:

```
     <SyncML>
     <SyncHdr VerSchema="2.0" VerProto="SyncML/2.0" SessionID="4"
     MsgID="4">
     <Target> <LocURI>http://www.syncml.org/sync-server</LocURI>
     </Target>
     <Source> <LocURI>IMEI:493005100592800</LocURI> </Source>
     </SyncHdr>
     <SyncBody>
     <Idle/> <!- idle package identifier -->
     <Final/>
     </SyncBody>
     </SyncML>
```

Step S705: The Calendar database has new data to be synchronized, and therefore, synchronization process 3 is started, and both parties stops sending idle packages.

Step S706: After completion of exchanging data, synchronization process 3 ends. If a synchronization session end identifier appears, the session ends; otherwise, both parties send idle packages to hold the synchronization session connection. The sending of the session identifier is exemplified below:

```
      <SyncML>
      <SyncHdr VerSchema="2.0" VerProto="SyncML/2.0" SessionID="4"
      MsgID="6">
     <Target> <LocURI>http://www.syncml.org/sync-server</LocURI>
     </Target>
     <Source> <LocURI>IMEI:493005100592800</LocURI> </Source>
     </SyncHdr>
     <SyncBody>
     <End_Of_Session/> <!- end identifier of synchronization session
     -->
     <Final/>
     </SyncBody>
     </SyncML>
```

In the data synchronization method under the present invention, a synchronization process is started in the synchronization session to synchronize the data between both parties. The data are synchronized in real time, without the need of recreating a session or retransmitting the equipment capability information of both parties, thus saving the traffic of data transmission. The synchronization processes for synchronizing different databases may be executed in one session, and such synchronization processes may be started anytime during the session, thus enhancing flexibility of data synchronization. An Anchor is added for the synchronization process to indicate the completion state of the synchronization process, and retransmission may be performed conveniently in the case of synchronization process failure, thus improving the synchronization efficiency and saving the traffic of data transmission. Therefore, the disorder in the synchronization session is overcome, the synchronization efficiency is improved, and the error probability is reduced.

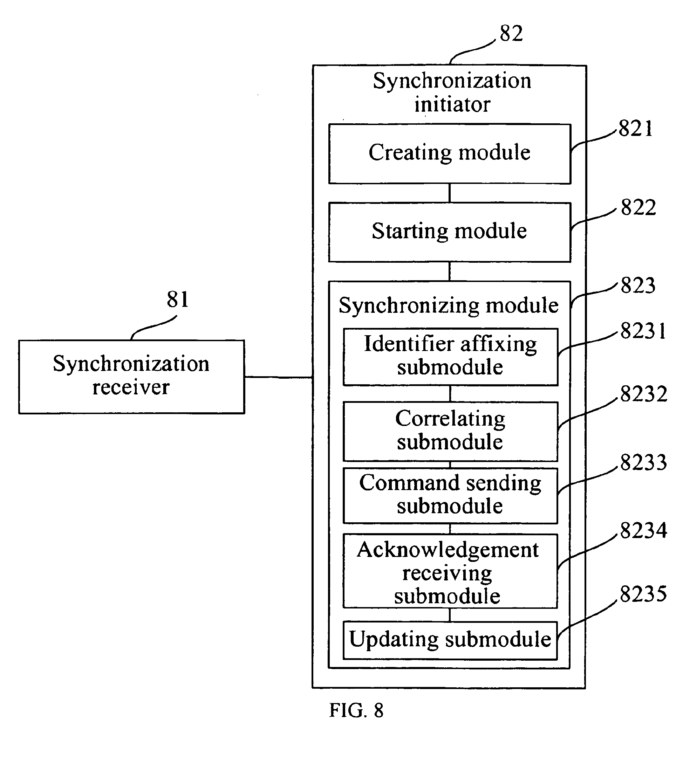

FIG. 8 shows a structure of a system for synchronizing data in an embodiment of the present invention. The system includes:
a synchronization initiator 82, adapted to synchronize data with the synchronization recipient 81;
a synchronization recipient 81, adapted to receive a synchronization session request; and
a synchronization initiator 82, adapted to: send a synchronization session request to the synchronization recipient 81 to create a synchronization session connection with the synchronization recipient 81, start a synchronization process in the synchronization session, and synchronize data with the synchronization recipient 81 through the synchronization process.

The synchronization initiator 82 includes:
a creating module 821, adapted to: send a synchronization session request to the synchronization recipient 81 to create a synchronization session connection with the synchronization recipient 81;
a starting module 822, adapted to start a synchronization process in the synchronization session created by the creating module 821, where the synchronization process includes a process identifier; and
a synchronizing module 823, adapted to synchronize data with the synchronization recipient 81 through the synchronization process started by the starting module 822.

The synchronizing module 823 includes:
an identifier affixing submodule 8231, adapted to affix a synchronization process end identifier to the synchronization process, and affix a synchronization session end identifier to the synchronization session; and
a correlating submodule 8232, adapted to correlate the synchronization process identifier affixed by the identifier affixing submodule 8231 with the process identifier of the synchronization process.

The synchronizing module 823 further includes:
a command sending submodule 8233, adapted to: send a session maintenance command or an idle message package to the synchronization recipient 81 when waiting for new synchronization data after a synchronization process ends in a synchronization session; and
an acknowledgement receiving submodule 8234, adapted to: receive an acknowledgement returned by the synchronization recipient 81, and hold the synchronization session.

The synchronizing module 823 further includes an updating submodule 8235, which is adapted to update the anchor value after a synchronization process ends or a message package in the synchronization process is sent, where the anchor value indicates completion of the synchronization process or completion of transmitting the message package in the synchronization process.

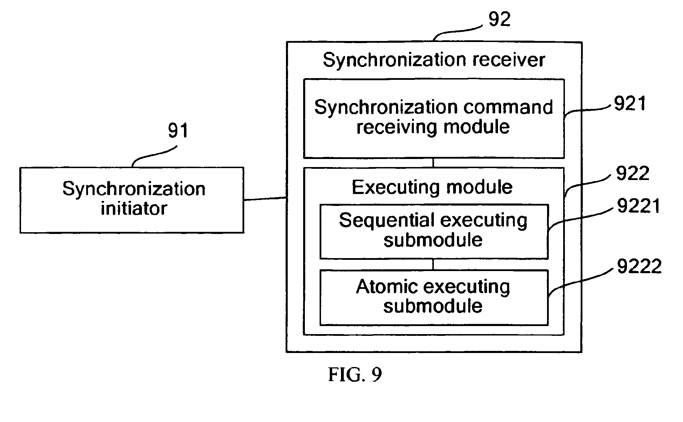

FIG. 9 shows a structure of a system for executing a synchronization command in an embodiment of the present invention. The system includes:
a synchronization initiator 91, adapted to synchronize data with the synchronization recipient 92;
a synchronization initiator 91, adapted to: send a synchronization command which carries an instruction of executing the synchronization command item; and
a synchronization recipient 92, adapted to: receive the synchronization command from the synchronization initiator 91, and execute the synchronization command item in the mode indicated by the instruction of executing the synchronization command item.

The synchronization recipient 92 includes:
a synchronization command receiving module 921, adapted to: receive a synchronization command from a synchronization initiator 91, where the synchronization command carries an instruction of executing the synchronization command item; and
an executing module 922, adapted to execute the synchronization command item in the mode indicated by the instruction of executing the synchronization command item in the synchronization command received by the synchronization command receiving module 921.

The executing module 922 includes a sequential executing submodule 9221, which is adapted to execute the synchronization command item sequentially according to the sequential execution instruction if the instruction of executing the synchronization command is a sequential execution instruction.

The executing module 922 includes an atomic executing submodule 9222, which is adapted to execute the synchronization command item atomically according to the atomic execution instruction if the instruction of executing the synchronization command is an atomic execution instruction.

After reading the foregoing embodiments, those skilled in the art are clearly aware that the present invention may be implemented through hardware, or through software in addition to a necessary universal hardware platform. Therefore, the technical solution under the present invention may be embodied as a software product. The software product may be stored in a non-volatile storage medium (such as CD-ROM, USB flash disk, or mobile hard disk), and may include several instructions that enable a computer device (such as personal computer, server, or network device) to perform the methods provided in the embodiments of the present invention.

Although the invention has been described through several preferred embodiments, the invention is not limited to such embodiments. It is apparent that those skilled in the art may make modifications and variations to the invention.

## Claims

1. A method for synchronizing data, comprising:
sending (S101), a synchronization session request to a synchronization recipient to create a synchronization session connection between a synchronization initiator and the synchronization recipient,: wherein the synchronization session comprises one or more synchronization processes; and
starting (S102), in the synchronization session connection, the synchronization processes through which the synchronization initiator synchronizes data with the synchronization recipient; wherein the synchronization processes are executed concurrently or sequentially;
**characterized in that** the method comprises:
maintaining the synchronization session connection in an Alert Poll mode or a Alert Idle mode;
wherein in the Alert Poll mode, the synchronization initiator sends a first Alert command to the synchronization recipient, and the synchronization recipient returns a Status command which carries a waiting time, wherein the synchronization initiator sends a session maintenance command after expiry of the waiting time, if the synchronization initiator sends no new command and receives no new command from the synchronization recipient within the waiting time;
in the Alert Idle mode, the synchronization initiator sends a second Alert command to a synchronization recipient which carries a waiting time, and wherein the synchronization recipient sends back a Status command after expiry of the waiting time, if the synchronization recipient sends no new command and receives no new command from the synchronization initiator within the waiting time; and after receiving the Status command, the synchronization initiator sends a session maintenance command;
and sending, by either the synchronization initiator or the synchronization recipient a session end command to the other of the synchronization initiator and the synchronization recipient to request to end the synchronization session; wherein the other of the synchronization initiator or synchronization recipient needs to accept the request and to end the session ; when the synchronization recipient wants to continue the synchronization, the synchronization recipient initiates a new synchronization session .

2. The method of claim 1, **characterized in that**: wherein each of the synchronization processes comprises a unique process identifier or a unique database identifier.

3. The method of claim 1, **characterized in that**:
affixing, a synchronization process end identifier to one of the synchronization processes;
and
determining, termination of the one of the synchronization processes according to the synchronization message package that carries the synchronization process end identifier.

4. The method of claim 1, **characterized in that**: the first Alert command or the second Alert command for maintaining the synchronization session carries authentication information, wherein both of the synchronization initiator and the synchronization recipient authenticate each other through the authentication information.

5. The method of claim 1, **characterized in that**:
starting, by the synchronization initiator or the synchronization recipient, the synchronization process within the time interval of maintaining the session.

6. A synchronization initiator (82), **characterized by** comprising:
a creating module (821), adapted to send a synchronization session request to the synchronization recipient to create a synchronization session connection with the synchronization recipient; wherein the synchronization session comprises multiple synchronization processes;
a starting module (822), adapted to start the synchronization processes in the synchronization session created by the creating module; and a synchronizing module (823), adapted to synchronize data with the synchronization recipient through the synchronization process started by the starting module; wherein the synchronization processes are executed concurrently or sequentially;
the synchronizing module (823) further comprises: a command sending submodule (8233), adapted to send a session maintenance command to the synchronization recipient when waiting for new synchronization data after one of the synchronization processes ends in the synchronization session; wherein the synchronization session connection is maintained in an Alert Poll mode or a Alert Idle mode; wherein in the Alert Poll mode, the synchronization initiator sends a first Alert command to the synchronization recipient, and the synchronization recipient returns a Status command which carries a waiting time, wherein the synchronization initiator sends a session maintenance command after expiry of the waiting time, if the synchronization initiator sends no new command and receives no new command from the synchronization recipient within the waiting time;
in the Alert Idle mode, a synchronization initiator sends a second Alert command which carries a waiting time to a synchronization recipient, and wherein the synchronization recipient sends back a Status command after expiry of the waiting time, if the synchronization recipient sends no new command and receives no new command from the synchronization initiator within the waiting time; and after receiving the Status command, the synchronization initiator sends a session maintenance command;
an acknowledgement receiving submodule (8234), adapted to receive an acknowledgement returned by the synchronization recipient and hold the synchronization session ;
a module adapted to send a session end command to the synchronization recipient to request to end the synchronization session; wherein the synchronization recipient needs to agree to end the session; when the synchronization recipient wants to continue the synchronization, the synchronization recipient initiates a new synchronization session.

7. The synchronization initiator of claim 6, **characterized by** comprising:
an identifier affixing submodule (8231), adapted to affix a synchronization process end identifier to the synchronization process.

8. A system for synchronizing data, comprising:
a synchronization initiator according to any of the claims 6-7; and
a synchronization recipient, adapted to receive the synchronization session request sent by the synchronization initiator.

## Patentansprüche

1. Verfahren zum Synchronisieren von Daten, umfassend:
Senden (S101) einer Synchronisations-Sitzungsanforderung zu einem Synchronisationsempfänger, um eine Synchronisations-Sitzungsverbindung zwischen einem Synchronisationsinitiator und dem Synchronisationsempfänger zu erzeugen,
wobei die Synchronisationssitzung einen oder mehrere Synchronisationsprozesse umfasst; und
Starten (S102) der Synchronisationsprozesse, wodurch der Synchronisationsinitiator Daten mit dem Synchronisationsempfänger synchronisiert, in der Synchronisations-Sitzungsverbindung; wobei die Synchronisationsprozesse gleichzeitig oder sequentiell ausgeführt werden;
**dadurch gekennzeichnet, dass** das Verfahren Folgendes umfasst:
Aufrechterhalten der Synchronisations-Sitzungsverbindung in einem Modus des Alert Poll oder einem Modus des Alert Idle;
wobei der Synchronisationsinitiator in dem Modus Alert Poll einen ersten Alert-Befehl zu dem Synchronisationsempfänger sendet und der Synchronisationsempfänger einen Status-Befehl zurückgibt, der eine Wartezeit trägt,
wobei der Synchronisationsinitiator nach dem Ablauf der Wartezeit einen Sitzungs-Aufrechterhaltungsbefehl sendet, wenn der Synchronisationsinitiator innerhalb der Wartezeit keinen neuen Befehl sendet und keinen neuen Befehl von dem Synchronisationsempfänger empfängt;
in dem Modus Alert Idle sendet der Synchronisationsinitiator einen zweiten Alert-Befehl zu einem Synchronisationsempfänger, der eine Wartezeit trägt, und wobei der Synchronisationsempfänger nach dem Ablauf der Wartezeit einen Status-Befehl zurücksendet, wenn der Synchronisationsempfänger innerhalb der Wartezeit keinen neuen Befehl sendet und keinen neuen Befehl von dem Synchronisationsinitiator empfängt; und nach dem Empfang des Status-Befehls sendet der Synchronisationsinitiator einen Sitzungs-Aufrechterhaltungsbefehl;
und entweder der Synchronisationsinitiator oder der Synchronisationsempfänger sendet einen Sitzungsendebefehl zu dem anderen des Synchronisationsinitiators und des Synchronisationsempfängers, um anzufordern, die Synchronisationssitzung zu beenden; wobei der andere des Synchronisationsinitiators oder Synchronisationsempfängers die Anforderung annehmen und die Sitzung beenden muss; und wenn der Synchronisationsempfänger die Synchronisation fortsetzen möchte, leitet der Synchronisationsempfänger eine neue Synchronisationssitzung ein.

2. Verfahren nach Anspruch 1, **dadurch gekennzeichnet, dass** jeder der Synchronisationsprozesse eine einzigartige Prozesskennung oder eine einzigartige Datenbasiskennung umfasst.

3. Verfahren nach Anspruch 1, **gekennzeichnet durch**:
Befestigen einer Synchronisationsprozess-Endekennung an einem der Synchronisationsprozesse; und
Bestimmen der Beendigung des einen der Synchronisationsprozesse gemäß dem Synchronisationsnachrichtenpaket, das die Synchronisationsprozess-Endekennung trägt.

4. Verfahren nach Anspruch 1, **dadurch gekennzeichnet, dass** der erste Alert-Befehl oder der zweite Alert-Befehl zum Aufrechterhalten der Synchronisationssitzung Authentifikationsinformationen trägt, wobei sich der Synchronisationsinitiator und der Synchronisationsempfänger beide gegenseitig durch die Authentifikationsinformationen authentifizieren.

5. Verfahren nach Anspruch 1, **gekennzeichnet durch**:
Starten des Synchronisationsprozesses **durch** den Synchronisationsinitiator oder den Synchronisationsempfänger innerhalb des Zeitintervalls des Aufrechterhaltens der Sitzung.

6. Synchronisationsinitiator (82), **dadurch gekennzeichnet, dass** er Folgendes umfasst:
ein Erzeugungsmodul (821), das dafür ausgelegt ist, eine Synchronisationssitzungsanforderung zu dem Synchronisationsempfänger zu senden,
um eine Synchronisations-Sitzungsverbindung mit dem Synchronisationsempfänger zu erzeugen, wobei die Synchronisationssitzung mehrere Synchronisationsprozesse umfasst;
ein Startmodul (822), das dafür ausgelegt ist, die Synchronisationsprozesse in der durch das Erzeugungsmodul erzeugten Synchronisationssitzung zu starten; und ein Synchronisierungsmodul (823), das dafür ausgelegt ist, durch den durch das Startmodul gestarteten Synchronisationsprozess Daten mit dem Synchronisationsempfänger zu synchronisieren; wobei die Synchronisationsprozesse gleichzeitig oder sequentiell ausgeführt werden; wobei das Synchronisierungsmodul (823) ferner Folgendes umfasst: ein Befehlssende-Submodul (8233), das dafür ausgelegt ist, einen Sitzungshaltebefehl zu dem Synchronisationsempfänger zu senden, wenn auf neue Synchronisationsdaten gewartet wird, nachdem einer der Synchronisationsprozesse in der Synchronisationssitzung endet; wobei die Synchronisationssitzungsverbindung in einem Modus des Alert Poll oder einem Modus des Alert Idle gehalten wird; wobei in dem Modus Alert Poll der Synchronisationsinitiator einen ersten Alert-Befehl zu dem Synchronisationsempfänger sendet und der Synchronisationsempfänger einen Status-Befehl zurückgibt, der eine Wartezeit trägt, wobei der Synchronisationsinitiator nach dem Ablauf der Wartezeit einen Sitzungshaltebefehl sendet, wenn der Synchronisationsinitiator innerhalb der Wartezeit keinen neuen Befehl sendet und keinen neuen Befehl von dem Synchronisationsempfänger empfängt;
in dem Modus Alert Idle ein Synchronisationsinitiator einen zweiten Alert-Befehl, der eine Wartezeit trägt, zu einem Synchronisationsempfänger sendet, und wobei der Synchronisationsempfänger nach dem Ablauf der Wartezeit einen Status-Befehl zurücksendet, wenn der Synchronisationsempfänger innerhalb der Wartezeit keinen neuen Befehl sendet und keinen neuen Befehl von dem Synchronisationsinitiator empfängt; und nach dem Empfang des Status-Befehls der Synchronisationsinitiator einen Sitzungshaltebefehl sendet;
ein Bestätigungs-Empfangssubmodul (8234), das dafür ausgelegt ist, eine von dem Synchronisationsempfänger zurückgegebene Bestätigung zu empfangen und die Synchronisationssitzung zu halten;
ein Modul, das dafür ausgelegt ist, einen Sitzungsendbefehl zu dem Synchronisationsempfänger zu senden, um anzufordern, die Synchronisationssitzung zu beenden; wobei der Synchronisationsempfänger einwilligen muss, die Sitzung zu beenden; und wenn der Synchronisationsempfänger die Synchronisation fortsetzen möchte, der Synchronisationsempfänger eine neue Synchronisationssitzung einleitet.

7. Synchronisationsinitiator nach Anspruch 6, **dadurch gekennzeichnet, dass** er Folgendes umfasst:
ein Kennungsbefestigungs-Submodul (8231), das dafür ausgelegt ist, eine Synchronisationsprozess-Endekennung an dem Synchronisationsprozess zu befestigen.

8. System zum Synchronisieren von Daten, umfassend:
einen Synchronisationsinitiator nach einem der Ansprüche 6-7; und
einen Synchronisationsempfänger, der dafür ausgelegt ist, die durch den Synchronisationsinitiator gesendete Synchronisationssitzungsanforderung zu empfangen.

## Revendications

1. Procédé de synchronisation de données, comprenant :
l'envoi (S101) d'une requête de session de synchronisation à un destinataire de synchronisation afin de créer une connexion de session de synchronisation entre un demandeur de synchronisation et le destinataire de synchronisation ; dans lequel la session de synchronisation comprend un ou plusieurs processus de synchronisation ; et
le lancement (S 102), dans la connexion de session de synchronisation, des processus de synchronisation au moyen desquels le demandeur de synchronisation synchronise les données avec le destinataire de synchronisation ; les processus de synchronisation étant exécutés simultanément ou séquentiellement ;
**caractérisé en ce que** le procédé comprend :
le maintien de la connexion de session de synchronisation dans un mode Alerte par Interrogation ou dans un mode Alerte par Inactivité ;
dans lequel, dans le mode Alerte par Interrogation, le demandeur de synchronisation envoie une première commande d'Alerte au destinataire de synchronisation, et le destinataire de synchronisation renvoie une commande de Statut qui comporte un temps d'attente, dans lequel le demandeur de synchronisation envoie une commande de maintien de session après l'expiration du temps d'attente, si le demandeur de synchronisation n'envoie pas de nouvelle commande et ne reçoit pas de nouvelle commande du destinataire de synchronisation au terme du temps d'attente ;
dans le mode Alerte par Inactivité, le demandeur de synchronisation envoie une seconde commande d'Alerte à un destinataire de synchronisation qui comporte un temps d'attente, et dans lequel le destinataire de synchronisation renvoie une commande de Statut à l'expiration du temps d'attente, si le destinataire de synchronisation n'envoie pas de nouvelle commande et ne reçoit pas de nouvelle commande du demandeur de synchronisation au terme du temps d'attente ; et après réception de la commande de Statut, le demandeur de synchronisation envoie une commande de maintien de session ;
et l'envoi, par le demandeur de synchronisation ou par le destinataire de synchronisation, d'une commande de fin de session à l'autre du demandeur de synchronisation et du destinataire de synchronisation afin de requérir la fin de la session de synchronisation, l'autre du demandeur de synchronisation ou du destinataire de synchronisation devant accepter la requête et mettre fin à la session ;
quand le destinataire de synchronisation souhaite continuer la synchronisation, le destinataire de synchronisation lance une nouvelle session de synchronisation.

2. Procédé selon la revendication 1, **caractérisé en ce que** : chacun des processus de synchronisation comprend un identifiant de processus unique ou un identifiant de base de données unique.

3. Procédé selon la revendication 1, **caractérisé par** :
l'association d'un identifiant de fin de processus de synchronisation à l'un des processus de synchronisation ;
et
la détermination de la fin de l'un des processus de synchronisation en fonction du paquet de message de synchronisation qui comporte l'identifiant de fin de processus de synchronisation.

4. Procédé selon la revendication 1, **caractérisé en ce que** : la première commande d'Alerte ou la seconde commande d'Alerte pour maintenir la session de synchronisation comporte des informations d'authentification, à la fois le demandeur de synchronisation et le destinataire de synchronisation s'authentifiant l'un l'autre par le biais des informations d'authentification.

5. Procédé selon la revendication 1, **caractérisé par** :
le lancement, par le demandeur de synchronisation ou le destinataire de synchronisation, du processus de synchronisation dans l'intervalle de temps de maintien de la session.

6. Demandeur de synchronisation (82), **caractérisé en ce qu'**il comprend :
un module de création (821), adapté pour envoyer une requête de session de synchronisation au destinataire de synchronisation afin de créer une connexion de session de synchronisation avec le destinataire de synchronisation, la session de synchronisation comprenant de multiples processus de synchronisation ;
un module de lancement (822), adapté pour lancer les processus de synchronisation dans la session de synchronisation créée par le module de création ; et un module de synchronisation (823), adapté pour synchroniser les données avec le destinataire de synchronisation par le biais du processus de synchronisation lancé par le module de lancement ; dans lequel les processus de synchronisation sont exécutés simultanément ou séquentiellement ;
le module de synchronisation (823) comprenant en outre : un sous-module d'envoi de commande (8233), adapté pour envoyer une commande de maintien de session au destinataire de synchronisation quand l'attente de nouvelles données de synchronisation après l'un des processus de synchronisation se termine dans la session de synchronisation ; dans lequel la connexion de session de synchronisation est maintenue dans un mode Alerte par Interrogation ou dans un mode Alerte par Inactivité ; dans lequel, dans le mode Alerte par Interrogation, le demandeur de synchronisation envoie une première commande d'Alerte au destinataire de synchronisation, et le destinataire de synchronisation renvoie une commande de Statut qui comporte un temps d'attente, dans lequel le demandeur de synchronisation envoie une commande de maintien de session après l'expiration du temps d'attente, si le demandeur de synchronisation n'envoie pas de nouvelle commande et ne reçoit pas de nouvelle commande du destinataire de synchronisation au terme du temps d'attente ;
dans le mode Alerte par Inactivité, un demandeur de synchronisation envoie une seconde commande d'Alerte qui comporte un temps d'attente à un destinataire de synchronisation, et dans lequel le destinataire de synchronisation renvoie une commande de Statut à l'expiration du temps d'attente, si le destinataire de synchronisation n'envoie pas de nouvelle commande et ne reçoit pas de nouvelle commande du demandeur de synchronisation au terme du temps d'attente : et après réception de la commande de Statut, le demandeur de synchronisation envoie une commande de maintien de session ;
un sous-module de réception d'acquittement (8234), adapté pour recevoir un acquittement renvoyé par le destinataire de synchronisation et maintenir la session de synchronisation ;
un module adapté pour envoyer une commande de fin de session au destinataire de synchronisation afin de requérir la fin de la session de synchronisation ; dans lequel le destinataire de synchronisation doit convenir de mettre fin à la session ; quand le destinataire de synchronisation souhaite continuer la synchronisation, le destinataire de synchronisation lance une nouvelle session de synchronisation.

7. Demandeur de synchronisation selon la revendication 6, **caractérisé en ce qu'**il comprend :
un sous-module d'association d'identifiant (8231), adapté pour associer un identifiant de fin de processus de synchronisation au processus de synchronisation.

8. Système de synchronisation de données, comprenant :
un demandeur de synchronisation selon l'une quelconque des revendications 6-7 ; et
un destinataire de synchronisation, adapté pour recevoir la requête de session de synchronisation envoyée par le demandeur de synchronisation.
